# EUROPEAN PATENT APPLICATION

(11) **EP 4 438 561 A1**
(43) Date of publication of application: **02.10.2024**
(21) Application number: 22931733.4
(22) Date of filing: 16.09.2022
(51) Int. Cl.: C01G 25/02

(54) **ZIRCONIUM OXIDE MONOMER DISPERSION AND PREPARATION METHOD THEREFOR, OPTICAL FILM AND DISPLAY SCREEN**

(30) Priority: 18.03.2022 CN 202210271565
(71) Applicant: Shandong Sinocera Functional Material Co., Ltd., Dongying, Shandong 257091 (CN)
(72) Inventor: SONG, Xibin, Dongying, Shandong 257091 (CN); MA, Haiyang, Dongying, Shandong 257091 (CN); LYU, Yuxing, Dongying, Shandong 257091 (CN); AI, Liaodong, Dongying, Shandong 257091 (CN); XI, Hongliang, Dongying, Shandong 257091 (CN); ZHANG, Yan, Dongying, Shandong 257091 (CN)
(74) Representative: Dilg, Haeusler, Schindelmann Patentanwaltsgesellschaft mbH
(86) International application number: PCT/CN2022/119288
(87) International publication number: WO 2023/173712

(57) **Abstract**

The present invention relates to the technical field of zirconium oxide, and provides a zirconium oxide monomer dispersion and a preparation method therefor, an optical film and a display screen. The zirconium oxide monomer dispersion is mainly prepared from raw materials such as nano zirconium oxide, monomer resin, a stabilizer and a refractive index regulator. Using the nano zirconium oxide as inorganic dispersion particles can reduce the scattering effect of particles on light, thereby improving the transmissivity of the system; the addition of the stabilizer can improve the dispersity and uniformity of the zirconium oxide monomer dispersion; in addition, due to the addition of the refractive index regulator, the refractive indexes of the raw materials in the whole system can be better matched, thereby improving the transmissivity of the system. The present invention also provides a preparation method for the zirconium oxide monomer dispersion, the process is simple, and the entire dispersion process does not require the participation of an intermediate phase, so that the process steps can be greatly reduced, and the cost is lowered.

## Description

### Cross-Reference to Related Application

The present invention claims priority to Chinese Patent Application No. CN202210271565.8, filed with the Chinese Patent Office on March 18, 2022, entitled "ZIRCONIUM OXIDE MONOMER DISPERSION AND PREPARATION METHOD THEREFOR, OPTICAL FILM AND DISPLAY SCREEN", the entirety of which is incorporated herein by reference.

### Technical Field

The present invention relates to the technical field of zirconia (zirconium oxide), in particular to a zirconia monomeric dispersion liquid (i.e., zirconium oxide monomer dispersion) and a preparation method therefor, an optical film and a display screen.

### Background Art

In recent years, a zirconia particle dispersion is combined with a transparent resin or a thin film to obtain a monomeric zirconia dispersion liquid, which is well applied in the optical field. For example, optical films such as brightness enhancement films prepared with zirconia monomeric dispersion liquid can be used on LCD displays to increase the brightness and clarity of the screen.

In the above application, when the primary particle size of zirconia and the secondary aggregating particle size of zirconia in the monomeric resin are close to the wavelength of visible light (380-800 nm), due to the influence of scattering by zirconia particles, white turbidity occurs in the monomeric resin or the membrane system, such that the required transparency cannot be obtained. Therefore, to develop a high-transparency zirconia dispersion liquid that zirconia particles are dispersed in a resin in the form of microparticle is urgent.

Although some monomeric dispersion liquid has been successfully prepared now, most of them have problem of poor transmittance, which affects the effect when being applied to the downstream display field. For example, patent CN 106268394 B discloses a method for preparing zirconia particles or its dispersion liquid, when the zirconia contained in its aqueous dispersion liquid takes up more than 20% by weight, the transmittance at a wavelength of 400 nm is more than 35%. The transmittance at 800 nm is above 95%, and the viscosity at 25 °C is less than 20 mPa·s. However, this patent does not involve the content of the transmittance of the zirconia monomeric dispersion liquid. The zirconia monomeric dispersion liquid is an organic-inorganic composite system, and the components interact with each other and the influencing factors are complicated, especially the refractive index of each component in the system. Balancing the transmittance of the system and the stability of zirconia particles in the system is difficult. Blindly pursuing a high index in one aspect will inevitably lead to a decrease in the index of another aspect. Therefore, it is of great significance to develop a monomeric dispersion liquid that has simple process, coordinated indices in the system and high transmittance and is suitable for practical applications.

In view of this, the present invention is proposed.

### Summary

The object of the present invention includes providing a zirconia monomeric dispersion liquid and a preparation method therefor, so as to solve at least one technical problem existing in the prior art.

In order to achieve the above object, the technical solution of the present invention is as follows.

The present invention provides a zirconia monomeric dispersion liquid, comprising the following raw materials:
nano-zirconia, monomeric resin, stabilizer and refractive index modifier, wherein
the mass fraction of the nano-zirconia accounting for the zirconia monomeric dispersion liquid is 50%-75%;
the mass of the stabilizer is 1%-10% of the mass of the nano-zirconia;
the mass of the refractive index modifier is 1%-10% of the mass of the nano-zirconia; and
the monomeric resin includes any one of phenoxybenzyl acrylate, biphenylmethanol acrylate, benzyl acrylate or o-phenylphenoxyethyl acrylate, or a combination of at least two therefrom.

Optionally, an average particle size of the nano-zirconia is 1-20nm.

Optionally, a structure of the stabilizer is R-Xₙ, wherein
R is any one selected from alkyl groups, sulfonic acid groups, phosphate groups, amide groups, carboxyl groups, hydroxyl groups, aromatic rings or substituted aromatic rings, or a combination of at least two therefrom;
X is any one selected from polyether chains, acrylate chains, polyester chains or alkyl chains, or a combination of at least two therefrom; and
n is an integer between 1 and 3.

Optionally, the stabilizer comprises any one of polyoxyethylene octylphenol ether, polyoxyethylene alkyl ether, triethylhexyl phosphoric acid, stearamide or hydroxypropyl acrylate, or a combination of at least two therefrom.

Optionally, a structure of the refractive index modifier is A-Bₘ, wherein
A is any one selected from substituted or unsubstituted acryloyloxy groups, methylene groups, alkoxy groups, carbon-carbon double bonds, silyl groups or alkyl groups, or a combination of at least two therefrom;
B is any one selected from hydroxyl groups, carbonyl groups, ester groups, siloxy groups, alkoxy groups, carboxyl groups, or substituted or unsubstituted aromatic rings, or a combination of at least two therefrom; and
m is an integer between 1 and 3.

Optionally, the refractive index modifier comprises any one of glycol ether (ethylene glycol monoethyl ether), 4-(4-acryloyloxybutoxy)-benzoic acid or tri(methoxyethoxy) propylacyloxysilane (tris(methoxyethoxy)propionyloxysilane), or a combination of at least two therefrom.

The present invention further provides a preparation method of zirconia monomeric dispersion liquid, wherein the preparation method of zirconia monomeric dispersion liquid comprises following steps:
mixing nano-zirconia with a monomeric resin for a primary dispersion, and then mixing a resultant with a stabilizer and a refractive index modifier for a secondary dispersion to obtain the zirconia monomeric dispersion liquid.

Optionally, a time for the primary dispersion is 30-90min.

Preferably, a time for the secondary dispersion is 30-60min.

Preferably, the primary dispersion and the secondary dispersion are all dispersed by a dispersing equipment.

The present invention further provides an optical film, wherein the optical film is made of the zirconia monomeric dispersion liquid mentioned above.

Compared with the prior art, the present invention has the following benefit effects.
(1) The present invention provides a zirconia monomeric dispersion liquid, which is mainly made of raw materials such as nano-zirconia, monomeric resin, stabilizer, and refractive index modifier, wherein the nano-zirconia is used as inorganic dispersed particles, which can reduce the scattering effect of particles on light, thereby improving the transmittance of the system; the addition of stabilizers can improve the dispersion and uniformity of zirconia monomeric dispersion liquid; moreover, the addition of the refractive index modifier can make the refractive index of each raw material in the whole system more matched, thus improving the transmittance of the system. The zirconia monomeric dispersion liquid has higher stability and transmittance through the cooperation between the aforementioned raw materials.
(2) The present invention provides a preparation method of zirconia monomeric dispersion liquid, wherein the nano-zirconia is mixed with the monomeric resin for primary dispersion, and then it is mixed with a stabilizer and a refractive index modifier for secondary dispersion to obtain the zirconia monomeric dispersion liquid. The preparation method has a simple process and does not require the participation of an intermediate phase in the entire dispersion process, which can greatly reduce the process steps and reduce the cost.
(3) The present invention further provides an optical film, wherein the optical film is made of the zirconia monomeric dispersion liquid mentioned above. In view of the advantages of the above-mentioned zirconia monomeric dispersion liquid, the prepared optical film has good optical properties.
(4) The present invention further provides a display screen, wherein the display screen comprises the optical film mentioned above. In view of the advantages of the above-mentioned optical film, the display screen has good brightness and clarity.

### Detailed Description of Embodiments

The present invention will be described in detail below in conjunction with the embodiments and examples, those skilled in the art can understand that the following embodiments and examples are only for illustrating the present invention, and should not be considered as limiting the scope of the present invention. If the specific conditions are not indicated, the general conditions or the conditions suggested by the manufacturer is followed. The reagents or instruments used without indicated manufacturer, which are all conventional products that could be purchased from the market.

According to the first aspect of the present invention, the present invention provides a zirconia monomeric dispersion liquid, including the following raw materials:
nano-zirconia, monomeric resin, a stabilizer and a refractive index modifier, wherein
the mass fraction of nano-zirconia accounting for the zirconia monomeric dispersion liquid is 50%-75%;
the mass of stabilizer is 1%-10% of the mass of nano-zirconia;
the mass of the refractive index modifier is 1%-10% of the mass of the nano-zirconia; and
the monomeric resin includes any one of phenoxybenzyl acrylate, biphenylmethanol acrylate, benzyl acrylate or o-phenylphenoxyethyl acrylate, or a combination of at least two therefrom.

In the present invention, the source of the nano-zirconia is not limited, which can be obtained commercially, and can also be self-prepared using conventional preparation methods in the art.

The type of monomeric resin has certain restriction, so as to make it has good dispersion ability for nano-zirconia, require no participation of intermediate phase, and also has a refractive index matching that of nano-zirconia.

Nano-zirconia is used as the inorganic dispersed particles in the zirconia monomeric dispersion liquid. On the one hand, due to its small particle size, the scattering effect of particles on light can be reduced, thereby improving the transmittance of the system. On the other hand, the refractive index of nano-zirconia also has a good matching degree with the refractive index of the specific type of monomeric resin disclosed herein, which can greatly reduce the degree of scattering of light by the system, thereby increasing the transmittance of the system.

The addition of the stabilizer can make the nano-zirconia not easy to agglomerate and have better stability, such that the system keeps a higher transmittance.

The refractive index modifier can make the matching degree of refractive index between nano-zirconia and monomeric resin higher, such that the whole system has higher transmittance.

There are certain restrictions on the amount of each raw material in the zirconia monomeric dispersion liquid.

The typical but non-limiting mass fraction of nano-zirconia is 50%, 52%, 54%, 56%, 58%, 60%, 62%, 64%, 65%, 66%, 68%, 70%, 72%, 74% or 75%.

Since the monomeric resin is mainly for dispersing the nano-zirconia, its amount only needs to ensure that the mass fraction of nano-zirconia in the zirconia monomeric dispersion liquid reaches 50-75%.

The added amount of stabilizer and refractive index modifier is calculated by the mass of nano-zirconia.

The typical but non-limiting mass fraction of the stabilizer in the nano-zirconia is 1%, 2%, 3%, 4%, 5%, 6%, 7%, 8%, 9% or 10%. If the mass fraction of the stabilizer in nano-zirconia is too low (less than 1%), it is not able to stabilize the system and increase the transmittance of the system; and if the mass fraction of the stabilizer in nano-zirconia is too high (higher than 10%), it will affect the refractive index matching degree of each component of the whole system, resulting in failure to achieve the expected effect and increasing the cost.

The typical but non-limiting mass fraction of the refractive index modifier in nano-zirconia is 1%, 2%, 3%, 4%, 5%, 6%, 7%, 8%, 9% or 10%. If the mass fraction of the refractive index modifier in nano-zirconia is too low (less than 1%), it is not able to adjust the refractive index matching degree of the system; and if the mass fraction of the refractive index modifier in nano-zirconia is too high (higher than 10%), it is easy to fail the expected effect, and the cost increases.

The present invention provides a zirconia monomeric dispersion liquid, which is mainly made of raw materials such as nano-zirconia, monomeric resin, stabilizer, and refractive index modifier, wherein the nano-zirconia is used as inorganic dispersed particles, which can reduce the scattering effect of particles on light, thereby improving the transmittance of the system; the addition of stabilizers can improve the dispersion and uniformity of zirconia monomeric dispersion liquid; moreover, the addition of the refractive index modifier can make the refractive index of each raw material in the whole system more matched, thus improving the transmittance of the system. The zirconia monomeric dispersion liquid has higher stability and transmittance through the cooperation between the aforementioned raw materials.

As an optional embodiment of the present invention, the average particle size of the nano-zirconia is 1 to 20 nm. Typical but non-limiting particle size of nano-zirconia is, for example, 1nm, 2nm, 4nm, 5nm, 6nm, 8nm, 10nm, 12nm, 14nm, 15nm, 16nm, 18nm or 20nm.

By limiting the average particle size of nano-zirconia, it is beneficial to improve the refractive index of the system.

As an optional embodiment of the present invention, the structure of the stabilizer is R-Xₙ, wherein R is an anchoring group that can achieve the anchoring effect with nano-zirconia, and X is a solvation group that can interact with monomeric resin.

R is any one selected from alkyl groups, sulfonic acid groups, phosphate groups, amide groups, carboxyl groups, hydroxyl groups, aromatic rings or substituted aromatic rings, or a combination of at least two therefrom.

X is any one selected from polyether chains, acrylate chains, polyester chains or alkyl chains, or a combination of at least two therefrom.

n is an integer of 1 to 3, such as 1, 2 or 3.

As an optional embodiment of the present invention, the stabilizer includes any one of polyoxyethylene octylphenol ether, polyoxyethylene alkyl ether, triethylhexyl phosphoric acid, stearamide or hydroxypropyl acrylate, or a combination of at least two therefrom.

By specifically restricting the type of R and X groups in the structure of the stabilizer and the type of the stabilizer, the stabilizer can better interact with the zirconia particles and the monomeric resin to improve the transmittance of the system.

As an optional embodiment of the present invention, the structure of the refractive index modifier is A-Bₘ.

A is any one selected from substituted or unsubstituted acryloyloxy groups, methylene groups, alkoxy groups, carbon-carbon double bonds, silyl groups or alkyl groups, or a combination of at least two therefrom.

B is any one selected from hydroxyl groups, carbonyl groups, ester groups, siloxy groups, alkoxy groups, carboxyl groups, or substituted or unsubstituted aromatic rings, or a combination of at least two therefrom.

m is an integer of 1 to 3, such as 1, 2 or 3.

As an optional embodiment of the present invention, the refractive index modifier includes any one of glycol ether, 4-(4-acryloyloxybutoxy)-benzoic acid or tri(methoxyethoxy) propylacyloxysilane, or a combination of at least two therefrom.

By specifically limiting the type of A group and B group in the structure of the refractive index modifier and the type of the refractive index modifier, the refractive index modifier can match with the entire organic-inorganic system, thereby better adjusting the refractive index of the system, reducing the light scattering of the system and improving the system transmittance.

According to the second aspect of the present invention, the present invention further provides a method for preparing a zirconia monomeric dispersion liquid, comprising the following steps:
mixing the nano-zirconia with the monomeric resin for primary dispersion, and then mixing it with a stabilizer and a refractive index modifier for secondary dispersion to obtain a zirconia monomeric dispersion liquid.

In this preparation method, the nano-zirconia is mixed with the monomeric resin for primary dispersion, and then it is mixed with a stabilizer and a refractive index modifier for secondary dispersion. The preparation method has a simple process and does not require the participation of an intermediate phase in the entire dispersion process, which can greatly reduce the process steps and reduce the cost.

As an optional embodiment of the present invention, the time for primary dispersion is 30-90 min. A typical but non-limiting time for primary dispersion is 30min, 40min, 50min, 60min, 70min, 80min or 90min.

As an optional embodiment of the present invention, the time for secondary dispersion is 30-60 min. Typical but non-limiting time for secondary dispersion is 30 min, 40 min, 50 min or 60 min.

As an optional embodiment of the present invention, both the primary dispersion and the secondary dispersion are performed using dispersing equipment.

The dispersing equipment described herein can be understood as any equipment or technical means in the field to disperse materials in the corresponding medium in the form of small droplets, including but not limited to mechanical stirring, magnetic stirring, ultrasonic, homogenizer, colloid mill, etc.

According to the third aspect of the present invention, the present invention further provides an optical film, which is made by the above-mentioned zirconia monomeric dispersion liquid.

In view of the advantages of the above-mentioned zirconia monomeric dispersion liquid, the prepared optical film has good optical properties.

According to the fourth aspect of the present invention, the present invention further provides a display screen, comprising the above-mentioned optical film.

In view of the advantages of the above-mentioned optical film, the display screen has good brightness and clarity.

The technical solutions provided by the present invention will be further described below in combination with examples and comparative examples.

### Example 1

This example provided a zirconia monomeric dispersion liquid, including the following raw materials:
nano-zirconia, monomeric resin, stabilizer and refractive index modifier.

The average particle size of nano-zirconia was 10nm, and the mass fraction of nano-zirconia in zirconia monomeric dispersion liquid was 50%, 60% and 75% respectively. The monomeric resin was phenoxybenzyl acrylate, and the stabilizer was polyoxyethylene octylphenol ether, with an addition amount being 5% of the mass of the nano-zirconia. The refractive index modifier was glycol ether, and its addition amount was 5% of the mass of the nano-zirconia.

The preparation method of the zirconia monomeric dispersion liquid provided in this example comprised the following steps:
dispersing nano-zirconia in monomeric resin with the aid of dispersing equipment, and continuously dispersing for 30 min to obtain monomeric pre-dispersion liquid; and then
adding a stabilizer and a refractive index modifier to the above-mentioned monomeric pre-dispersion liquid, and continuing the dispersion for 30 min to obtain a zirconia monomeric dispersion liquid.

### Example 2-Example 14

Example 2-Example 14 respectively provided a zirconia monomeric dispersion liquid, and the specific compositions are shown in Table 1.

The preparation method of the zirconia monomeric dispersion liquid provided in Example 2-Example 14 was the same as that in Example 1.

### Comparative Example 1-Comparative Example 7

Comparative Example 1-Comparative Example 7 respectively provided a zirconia monomeric dispersion liquid, and the specific compositions are shown in Table 1.

The preparation method of the zirconia monomeric dispersion liquid provided in Comparative Example 1-Comparative Example 7 was the same as that of Example 1.

It should be noted that the addition amount of stabilizer in Table 1 refers to the mass percentage of the stabilizer in nano-zirconia, the addition amount of the refractive index modifier refers to the mass percentage of the refractive index modifier in nano-zirconia, and the mass fraction of nano-zirconia refers to the mass fraction of nano-zirconia in the zirconia monomeric dispersion liquid.

At the same time, the transmittance at 650nm wavelength of the zirconia monomeric dispersion liquid prepared in each example and comparative example was detected, and the transmittance was measured by a UV-visible spectrophotometer (C-7100 manufactured by Qingdao Lantesi Scientific and Educational Instrument Co., Ltd.). The specific results are shown in Table 1.

**Table 1**

| Experiment group | Stabilizer | Addition amount of stabilizer | Refractive index modifier | Addition amount of refractive index modifier | Monomeric resin | Mass fraction of nano-zirconia | Transmittance of monomeric dispersion liquid |
|---|---|---|---|---|---|---|---|
| Example 1 | polyoxyethylene octylphenol ether | 5 wt% | glycol ether (ethylene glycol monoethyl ether) | 5 wt% | PBA | 50 wt% | 82% |
| | | | | | | 60 wt% | 68% |
| | | | | | | 75 wt% | 57% |
| Example 2 | polyoxyethylene octylphenol ether | 5wt% | glycol ether | 5wt% | BPMA | 50 wt% | 90% |
| | | | | | | 60 wt% | 78% |
| | | | | | | 75 wt% | 65% |
| Example 3 | polyoxyethylene octylphenol ether | 5 wt% | glycol ether | 5 wt% | BZA | 50 wt% | 74% |
| | | | | | | 60 wt% | 62% |
| | | | | | | 75 wt% | 49% |
| Example 4 | polyoxyethylene octylphenol ether | 5 wt% | glycol ether | 5wt% | OPPEA | 50 wt% | 87% |
| | | | | | | 60 wt% | 73% |
| | | | | | | 75 wt% | 58% |
| Example 5 | polyoxyethylene octylphenol ether | 1 wt% | glycol ether | 1 wt% | PBA | 50 wt% | 62% |
| | | | | | | 60 wt% | 49% |
| | | | | | | 75 wt% | 34% |
| Example 6 | polyoxyethylene octylphenol ether | 10 wt% | glycol ether | 10 wt% | PBA | 50 wt% | 49% |
| | | | | | | 60 wt% | 33% |
| | | | | | | 75 wt% | 20% |
| Example 7 | polyoxyethylene alkyl ether | 5 wt% | glycol ether | 5wt% | PBA | 50 wt% | 80% |
| | | | | | | 60 wt% | 67% |
| | | | | | | 75 wt% | 54% |
| Example 8 | triethylhexyl phosphoric acid | 5 wt% | glycol ether | 5 wt % | PBA | 50 wt% | 78% |
| | | | | | | 60 wt% | 65% |
| | | | | | | 75 wt% | 51% |
| Example 9 | stearamide | 5 wt% | glycol ether | 5 wt% | PBA | 50 wt% | 81% |
| | | | | | | 60 wt% | 66% |
| | | | | | | 75 wt% | 52% |
| Example 10 | hydroxypropyl acrylate | 5 wt% | glycol ether | 5 wt% | PBA | 50 wt% | 83% |
| | | | | | | 60 wt% | 68% |
| | | | | | | 75 wt% | 54% |
| Example 11 | polyoxyethylene octylphenol ether | 5 wt% | 4-(4-acryloyloxybutoxy)-benzoic acid | 5 wt% | PBA | 50 wt% | 85% |
| | | | | | | 60 wt% | 72% |
| | | | | | | 75 wt% | 58% |
| Example 12 | polyoxyethylene octylphenol ether | 5 wt% | tri(methoxyethoxy) propylacyloxysilane (tris(methoxyethoxy)propionyl oxysilane) | 5 wt % | PBA | 50 wt% | 83% |
| | | | | | | 60 wt% | 70% |
| | | | | | | 75 wt% | 59% |
| Example 13 | polyoxyethylene octylphenol ether | 5 wt% | 4-(4-acryloyloxybutoxy)-benzoic acid | 5 wt % | OPPEA | 50 wt% | 88% |
| | | | | | | 60 wt% | 75% |
| | | | | | | 75 wt% | 61% |
| Example 14 | polyoxyethylene octylphenol ether | 5 wt% | tri(methoxyethoxy) propylacyloxysilane | 5 wt % | BPMA | 50 wt% | 90% |
| | | | | | | 60 wt% | 76% |
| | | | | | | 75 wt% | 62% |
| Comparative Example 1 | / | / | glycol ether | 5 wt % | PBA | 50 wt% | 18% |
| | | | | | | 60 wt% | 14% |
| | | | | | | 75 wt% | 8% |
| Comparative Example 2 | polyoxyethylene octylphenol ether | 5 wt% | / | / | PBA | 50 wt% | 17% |
| | | | | | | 60 wt% | 12% |
| | | | | | | 75 wt% | 6% |
| Comparative Example 3 | / | / | / | / | PBA | 50 wt% | 14% |
| | | | | | | 60 wt% | 10% |
| | | | | | | 75 wt% | 4% |
| Comparative Example 4 | / | / | / | / | BPMA | 50 wt% | 17% |
| | | | | | | 60 wt% | 13% |
| | | | | | | 75 wt% | 8% |
| Comparative Example 5 | polyoxyethylene octylphenol ether | 15 wt% | glycol ether | 15 wt% | PBA | 50 wt% | 10% |
| | | | | | | 60 wt% | 5% |
| | | | | | | 75 wt% | 1% |
| Comparative Example 6 | polyoxyethylene octylphenol ether | 0.2 wt% | glycol ether | 5wt% | PBA | 50 wt% | 18% |
| | | | | | | 60 wt% | 15% |
| | | | | | | 75 wt% | 9% |
| Comparative Example 7 | polyoxyethylene octylphenol ether | 5 wt% | glycol ether | 5wt% | ethyl hexyl acrylate (2-EHA) | 50 wt% | 12% |
| | | | | | | 60 wt% | 6% |
| | | | | | | 75 wt% | 1% |

From the data in Table 1, it can be seen that compared with Comparative Examples 1-4, due to the addition of a stabilizer as well as a refractive index modifier in the Examples, both the dispersion effect and the adjustment effect of the refractive index of the zirconia monomeric dispersion liquid are better than those of Comparative Examples 1-4, so the transmittance of the monomeric dispersion liquid in the Examples are obviously higher than that of the Comparative Examples.

When the monomeric resin and nano-zirconia have a high matching degree of refractive index, it has a positive effect on improving the transmittance of the system. The refractive index matching degrees of nano-zirconia and monomeric resin PBA, BPMA, BZA and OPPEA in the present invention are higher than that of 2-EHA in Comparative Example 7. Therefore, the transmittance of the zirconia monomeric dispersion liquid prepared in Examples 1-4 is significantly higher than that in Comparative Example 7.

In the Example 5, the addition amount of stabilizer and the addition amount of the refractive index modifier are 1wt%, which is lower than 5wt% in Example 1, its dispersion effect and refractive index adjustment effect are lower than those of Example 1. Therefore, in Example 5, transmittance of the monomeric dispersion liquid is lower than that in Example 1. In Example 6, the addition amount of stabilizer and refractive index modifier is 10wt%, which is higher than 5wt% in Example 1, high content of stabilizer and refractive index modifier will affect the refractive index matching degree of each component of the whole system, and then affect the transmittance of the system, resulting in the transmittance of the monomeric dispersion liquid of Example 6 being lower than that of Example 1. As mentioned above, the amount of stabilizer and refractive index modifier should be controlled within a reasonable range, otherwise it will not only lead to the opposite effect, but also cause an increase in cost. Comparative Examples 5 and 6 can also illustrate this point.

Even though the present invention has been illustrated and described through particular examples, it should be noted that various other changes and modifications can be made without departing from the spirit and scope of the present invention. It is therefore intended to cover in the appended claims all such changes and modifications that are within the scope of the present invention.

### Industrial Applicability

The zirconia monomeric dispersion liquid provided by the present invention is mainly made of raw materials such as nano-zirconia, monomeric resin, stabilizer and refractive index modifier. Among them, nano-zirconia is used as inorganic dispersed particles, which can reduce the scattering effect of particles on light, thereby improving the transmittance of the system; and the addition of stabilizers can improve the dispersion and uniformity of zirconia monomeric dispersion liquid. In addition, the addition of refractive index modifiers can make the refractive index of each raw material in the whole system match better, thus improving the transmittance of system. In view of the advantages of the zirconia monomeric dispersion liquid, the optical film that is prepared by it has good optical properties.

## Claims

1. A zirconia monomeric dispersion liquid, **characterized in that** the zirconia monomeric dispersion liquid comprises following raw materials:
nano-zirconia, a monomeric resin, a stabilizer and a refractive index modifier, wherein
a mass fraction of the nano-zirconia accounting for the zirconia monomeric dispersion liquid is 50%-75%;
a mass of the stabilizer is 1%-10% of a mass of the nano-zirconia;
a mass of the refractive index modifier is 1%-10% of the mass of the nano-zirconia; and
the monomeric resin comprises any one of phenoxybenzyl acrylate, biphenylmethanol acrylate, benzyl acrylate or o-phenylphenoxyethyl acrylate, or a combination of at least two therefrom.

2. The zirconia monomeric dispersion liquid according to claim 1, wherein an average particle size of the nano-zirconia is 1-20nm.

3. The zirconia monomeric dispersion liquid according to claim 1, wherein a structure of the stabilizer is R-Xₙ, wherein
R is any one selected from alkyl groups, sulfonic acid groups, phosphate groups, amide groups, carboxyl groups, hydroxyl groups, aromatic rings or substituted aromatic rings, or a combination of at least two therefrom;
X is any one selected from polyether chains, acrylate chains, polyester chains or alkyl chains, or a combination of at least two therefrom; and
n is an integer between 1 and 3.

4. The zirconia monomeric dispersion liquid according to claim 3, wherein the stabilizer comprises any one of polyoxyethylene octylphenol ether, polyoxyethylene alkyl ether, triethylhexyl phosphoric acid, stearamide or hydroxypropyl acrylate, or a combination of at least two therefrom.

5. The zirconia monomeric dispersion liquid according to claim 1, wherein a structure of the refractive index modifier is A-Bₘ, wherein
A is any one selected from substituted or unsubstituted acryloyloxy groups, methylene groups, alkoxy groups, carbon-carbon double bonds, silyl groups or alkyl groups, or a combination of at least two therefrom;
B is any one selected from hydroxyl groups, carbonyl groups, ester groups, siloxy groups, alkoxy groups, carboxyl groups, or substituted or unsubstituted aromatic rings, or a combination of at least two therefrom; and
m is an integer between 1 and 3.

6. The zirconia monomeric dispersion liquid according to claim 5, wherein the refractive index modifier comprises any one of glycol ether, 4-(4-acryloyloxybutoxy)-benzoic acid or tri(methoxyethoxy) propylacyloxysilane, or a combination of at least two therefrom.

7. A preparation method of zirconia monomeric dispersion liquid, **characterized in that** the preparation method of zirconia monomeric dispersion liquid comprises following steps:
mixing nano-zirconia with a monomeric resin for a primary dispersion, and then mixing a resultant with a stabilizer and a refractive index modifier for a secondary dispersion to obtain the zirconia monomeric dispersion liquid.

8. The preparation method of zirconia monomeric dispersion liquid according to claim 7, wherein a time for the primary dispersion is 30-90min.

9. The preparation method of zirconia monomeric dispersion liquid according to claim 7, wherein a time for the secondary dispersion is 30-60min.

10. The preparation method of zirconia monomeric dispersion liquid according to claim 7, wherein the primary dispersion and the secondary dispersion are all dispersed by a dispersing equipment.

11. An optical film, **characterized in that** the optical film is made of the zirconia monomeric dispersion liquid according to any one of claims 1-6.

12. A display screen, **characterized in that** the display screen comprises the optical film according to claim 11.
